# EUROPEAN PATENT APPLICATION

(11) **EP 2 835 779 A1**
(43) Date of publication of application: **11.02.2015**
(21) Application number: 13185897.9
(22) Date of filing: 25.09.2013
(51) Int. Cl.: G06Q 30/02

(54) **Systems and methods of optimizing a content campaign**

(30) Priority: 05.08.2013 US 201313959420
(71) Applicant: Google Inc., Mountain View, CA 94043 (US)
(72) Inventor: Sullivan, John, San Carlos, CA 94070 (US); Wiggins, Michael, San Francisco, CA 94118 (US)
(74) Representative: Modiano, Micaela Nadia

(57) **Abstract**

Systems and methods of the present disclosure relate to optimizing a content campaign of a computer network. A data processing system ("system") can receive and parse a first content item of the content campaign from a content provider via a computer network to identify a logical element, which can include at least one of a verb, noun and temporal language. The system can identify a variant of the logical element to generate a second content item that includes the variant and maintains the syntactic integrity of the first content item. The system can provide at least one of the first content item and the second item for display on at least one web page responsive to receiving one or more requests for content. The system can analyze a performance metric for each of the first content item and the second content item to determine an optimum performing content item.

## Description

### BACKGROUND

In a networked environment such as the Internet, web publishers such as people or companies can provide information for display on web pages or other documents. The web pages can include text, video, or audio information provided by the entities via a web page server for display on the Internet. Content providers, such as third party advertisers, can provide additional content for display on the web pages together with the information provided by the web publishers. A content selection server may select certain additional content to display on a rendering of a web page based on various factors including, e.g., content selection criteria associated with the content to be displayed. Thus, a person viewing a web page can access the information that is the subject of the web page, as well as selected third party content that may appear with the web page.

### SUMMARY

Systems and methods of the present disclosure are generally directed to optimizing a content campaign by creating and testing variants of a content item. In one implementation, a system receives a first content item and parses the first content item to identify logical elements. A logical element can be a word or phrase that can be algorithmically identified using one or more parsing or analyzing techniques. If the system identifies multiple logical elements, the system can prioritize the logical elements (e.g., based on estimated importance, the order in which the logical element is placed in the content item, impact, font size, words or phrases of the logical element, logical element type, etc.). Progressing from the most to least important logical elements, the system can identify variants of logical elements. The system can use the variants to generate one or more alternative content items and test those new content items against the original content item (e.g., by providing the content item for display on a user device and analyzing a performance metric). The system may then identifying the best performing content item or content item variant to provide the best performing content item variant more often. The system can repeat one or more of these steps for each identified logical element. Upon identifying one or more best performing content item variants, the system can combine the best performing content item variants of different logical elements into new content items. The system may further test the new content item variant (which may include a combination of best performing logical element variants) against the original content item or other best performing new content item variants.

At least one aspect is directed to a system for optimizing a content campaign of a computer network. The system can include a data processing system which can include at least one processor. In one implementation, the data processing system can be configured to receive, via an interface of the data processing system, a first content item of the content campaign. The data processing system can receive the first content item from a content provider via the computer network. The data processing system can parse, e.g., via a parser of the data processing system, the first content item to identify a logical element of the first content item. The logical element can include at least one of a verb, noun and temporal language. The data processing system can identify, e.g., via a content item generator of the data processing system, a variant of the logical element to generate a second content item comprising the variant. The second content item can maintain the syntactic integrity of the first content item. The data processing system can provide, responsive to receiving one or more requests for content, at least one of the first content item and the second item for display on at least one web page. The data processing system can analyze, e.g., via an optimizer of the data processing system, a performance metric for each of the first content item and the second content item to determine an optimum performing content item.

At least one aspect is directed to a method of optimizing a content campaign of a computer network. The method can be performed by a data processing system that includes at least one processor executing. In one implementation, the method includes the data processing system receiving a first content item of the content campaign. The data processing system can receive the first content item from a content provider via a computer network. The method includes the data processing system parsing the first content item to identify a logical element of the first content item. The logical element can include at least one of a verb, noun, preposition, and temporal language. The method can include the data processing system identifying a variant of the logical element to generate a second content item that includes the variant. The second content item can include the variant and maintain the syntactic integrity of the first content item. The method can include the data processing system providing at least one of the first content item and the second item for display on at least one web page. The data processing system can provide the at least one of the first content item and the second content item responsive to receiving one or more requests for content. The data processing system can analyze a performance metric for each of the first content item and the second content item to determine an optimum performing content item. In one implementation, the data processing system can determine which content item has a higher click through rate or conversion rate, or predicted click through rate or predicted conversion rate.

In one implementation, the variant includes a variant identifier. The second content item can include a content item identifier indicating that the second content item is a variation of the first content item.

In one implementation, analyzing the performance metric includes receiving, by the data processing system, an indication of user interest in at least one of the first content item and the second content item. The method includes the data processing system identifying a value for an attribute related to the user interest. The method includes the data processing system maintaining a data structure that includes the attribute and the value for the indication of user interest in at least one of the first content item and the second content item. In one implementation, the attribute includes at least one of a time attribute and a location attribute related to the indication of user interest. In one implementation, the method includes determining, by the data processing system, that the first content item is an optimum performing content item for a first value of a first attribute. The method can include determining, by the data processing system, that the second content item is an optimum performing content item for a second value of the first attribute.

In one implementation, the method includes the data processing system receiving a subsequent request for content. The subsequent request for content can correspond to a first value of a first attribute. The method can include determining, for the first value, that the second content item is the optimum performing content item. Responsive to determining that the second content item is the optimum performing content item, the method can include providing the second content item for display.

In one implementation, the method includes the data processing system identifying a second logical element that is lower in priority than the logical element. The method can include the data processing system identifying a second variant for the second logical element. The method can include the data processing system generating a third content item that includes the second variant. The third content item can maintain the syntactic integrity of the first content item. In one implementation, the method includes the data processing system generating a fourth content item that includes the variant and the second variant. The fourth content item can maintain the syntactic integrity of the first content item.

In one implementation, the method includes the data processing system prompting the content provider for an indication of the logical element to facilitate identifying the logical element. The data processing system can prompt the content provider for the indication responsive to receiving the first content item. In one implementation, the method includes receiving, from the content provider, an indication of the logical element of the first content item.

In one implementation, identifying the variant includes the data processing system using a data structure that includes a mapping of logical elements to variants to identify the variant. The data structure can be generated based on parsing similar content items stored on the server. In one implementation, identifying the variant includes the data processing system comparing the identified logical element with several content items provided by several content providers.

At least one aspect is directed to a non-transitory computer-readable medium comprising processor executable instructions to optimize a content campaign. In one implementation, the instructions include instructions to receive, from a content provider, a first content item of the content campaign. The instructions can include instructions to parse the first content item to identify a logical element of the first content item. The logical element can include at least one of a verb, noun and temporal language. The instructions can include instructions to identify a variant of the logical element to generate a second content item. The second content item can include the variant and maintain the syntactic integrity of the first content item. The instructions can include instructions to provide, responsive to receiving one or more requests for content, at least one of the first content item and the second item for display on at least one web page. The instructions can include instructions to analyze a performance metric for each of the first content item and the second content item to determine an optimum performing content item.

### BRIEF DESCRIPTION OF THE DRAWINGS

The details of one or more implementations of the subject matter described in this specification are set forth in the accompanying drawings and the description below. Other features, aspects, and advantages of the subject matter will become apparent from the description, the drawings, and the claims.

FIG. 1 is an illustration of one implementation of a system for optimizing a content campaign of a computer network.

FIG. 2 is an illustration of one implementation of a method of optimizing a content campaign of a computer network.

FIGs. 3A-3E are illustrations of implementations of a graphical user interface for facilitating optimizing a content campaign of a computer network.

FIG. 4 shows one implementation of a network environment comprising client machines in communication with remote machines.

FIG. 5 is a block diagram illustrating a general architecture for a computer system that may be employed to implement various elements of the systems and methods described herein, in accordance with an implementation.

Like reference numbers and designations in the various drawings indicate like elements.

### DETAILED DESCRIPTION

Systems and methods of the present disclosure relate generally to improving the performance of an online content campaign (e.g., an organized program of content items that based on an idea or theme) that includes one or more content items (e.g., text, images, articles, documents, multimedia, blogs, advertisements, etc.) by automatically generating and testing multiple variants (e.g., including text or structural changes) of an existing content item and selecting the best performing (e.g., click through rate or conversion rate) content item for display with a web page. The selected best performing content items can be displayed responsive to search engine queries or displayed based on web content (e.g., a contextual advertisement placement). Since the present disclosure facilitates continuously generating and testing multiple variants of the content item, systems and methods of the present disclosure can identify optimum performing variants of content items based on attributes including, e.g., time of day or location of a user device.

More specifically, and in one implementation, the system receives a content item from a content provider and parses the content item to identify one or more logical elements. The system can parse a headline or description lines of the content item. The system may also parse a non-domain portion of a uniform resource locator ("URL") included or otherwise related to the content item (e.g., a landing page of the content item). In implementations in which multiple logical elements are identified, the system can prioritize the identified logical elements (e.g., in order of estimated importance or impact). A logical element can be a word, phrase, or symbols, or a combination thereof, that can be algorithmically identified and substituted with alternative variations. Using the alternative variation, the system can generate a new content item that maintains or improves the performance of the content item while maintaining the syntactic integrity of the resulting content item. In some implementations, the system can vary one or more elements at a time, detect and move logical elements (e.g., change placement of logical elements), phrases, or sentences within a content item, or generate variants that employ alternative construction (e.g., capitalization or punctuation).

The system can provide for display one or more content item variants and analyze the performance of each variant (e.g., based on click through rate or conversion rate). If the system identifies multiple logical elements, the system can generate variants and test variants for each logical element, identify the best performing variant for each logical element, and combine the best performing variants for each logical element to generate a new content item. The system can identify a best performing content item variant by comparing the performance of the content item variant with the original content item, or another content item variant of the original content item.

In some implementations, the system can further identify one or more attributes associated with the performance of the variants (e.g., time or location associated with an indication of user interest) and generate a data structure that includes for each indication of user interest a unique identifier corresponding to the variant and a value for the attribute. Thereafter, the system can determine which variants perform better for each value for each attribute in order to facilitate optimizing the performance of the content campaign. In one implementation, the system can identify content item variants that, in the aggregate, improve the performance of the content campaign. In an illustrative implementation, a first content item variant may perform better when displayed on user devices in California, while a second content item variant may perform better when displayed on user devices in Massachusetts.

By identifying both content item variants as performing well based on an attribute (e.g., location), the system can improve the performance of the content campaign by accordingly providing or selecting the content item variants for display based on the attribute. The system can provide self-correcting results that are biased in favor of improved performance where worse performing content items are throttled or not shown, while better performing content items receive a higher fraction of impressions over time.

In an illustrative implementation, the system can identify a call to action such as "Buy Now" as a logical element, and identify a variant such as "Buy Today" or "Order Now". Upon detecting the logical element and one or more variants, the system can generate new content items that include the variants for the logical element and provide or select those variants. Upon analyzing performance metrics associated with the variants, the system may determine that the variant "Buy Today" performed best in the evening when displayed on user devices located in Massachusetts, while the variant "Order Now" performed best in the morning when displayed on user devices located in California.

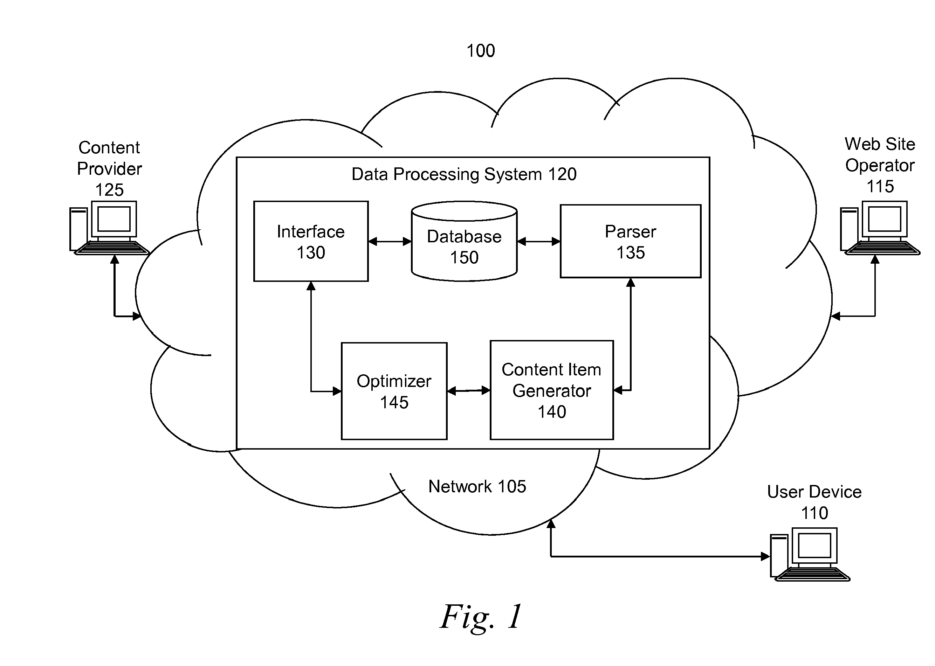

FIG. 1 illustrates one implementation of a system 100 for optimizing a content campaign of a computer network such as network 105. The network 105 can include computer networks such as the Internet, local, wide, metro, data, or other area networks, intranets, satellite networks, combinations thereof, and other communication networks such as voice or data mobile telephone networks. The network 105 can be used to access information resources such as web pages, web sites, domain names, or uniform resource locators that can be displayed on at least one user device 110, such as a laptop, desktop, tablet, personal digital assistant, smart phone, or portable computers. In one implementation, via the network 105 a user of the user device 110 can access web pages provided by at least one web site operator 115. In this implementation, a web browser of the user device 110 can access a web server of the web site operator 115 to retrieve a web page for display on a monitor of the user device 110. The web site operator 115 generally includes an entity that operates the web page. In one implementation, the web site operator 115 includes at least one web page server that communicates with the network 105 to make the web page available to the user device 110.

The system 100 can include at least one data processing system 120. The data processing system 120 can include at least one logic device such as a computing device having a processor to communicate via the network 105, such as with the user device 110, the web site operator 115, and at least one content provider 125. The data processing system 120 can include at least one server. In one implementation, the data processing system 120 includes several servers located in at least one data center. In one implementation, the data processing system 120 includes a content placement system having at least one server. The data processing system 120 can also include at least one interface 130, at least one parser 135, at least one content item generator 140, at least optimizer 145 and at least one database 150. The interface 130, parser 135, content item generator 140, or optimizer 145 can each include at least one processing unit or other logic device such as programmable logic array engine, or module configured to communicate with the database 150. The interface 130, parser 135, content item generator 140, or optimizer 145 can be separate components, a single component, or part of the data processing system 120.

In some implementations, the data processing system 120 obtains anonymous computer network activity information associated with several user devices 110. A user of a user device 110 can affirmatively authorize the data processing system 120 to obtain network activity information corresponding to the user's user device 110. The data processing system 120 can prompt the user of the user device 110 for consent to obtain one or more types of network activity information, such as geographic location information. The identity of the user of the user device 110 can remain anonymous and the user device 110 may be associated with a unique identifier (e.g., a cookie).

For situations in which the systems discussed here collect personal information about users, or may make use of personal information, the users may be provided with an opportunity to control whether programs or features that may collect personal information (e.g., information about a user's social network, social actions or activities, a user's preferences, or a user's current location), or to control whether or how to receive content from the content server that may be more relevant to the user. In addition, certain data may be treated in one or more ways before it is stored or used, so that certain information about the user is removed when generating parameters (e.g., demographic parameters). A user's identity may be treated so that no identifying information can be determined for the user, or a user's geographic location may be generalized where location information is obtained (such as to a city, ZIP code, or state level), so that a particular location of a user cannot be determined. Thus, the user may have control over how information is collected about the user and used by a content server.

In one implementation, the data processing system 120 receives content or content items from a content provider 125, such as a commercial entity, online retailer, business, advertiser, individual or any entity that wants to provide content for display on a user device 110 via the computer network 105. The content or content items may include, e.g., text, characters, symbols, images, video, audio, or multimedia content. In some implementations, a content item may include an online advertisement, article, promotion, coupon, or product description. A content provider 125 may group, coordinate or otherwise organize one or more content items into one or more content campaigns or content groups. A content campaign may include one or more content groups or content items that are based on a single or similar idea or theme. A content group may include one or more content items that share the same or similar content selection criteria (e.g., keywords or entities of the content item). One or more content items of a content campaign or content group may include URLs or links to the same or similar landing web page (advertisement campaigns may include multiple advertisements for the same or similar landing page). In one implementation, a content provider 125 may be identified via a unique identifier. In one implementation, a content campaign, content group, or content item can further be identified via a unique identifier when a content provider 125 establishes or sets up a content campaign or provides content to the data processing system 120. The unique identifier can include one or more of text, numbers, characters, symbols, indicators, or a combination thereof.

The data processing system 120 may provide the content item to the web page for display in response to receiving a request for content from a computing device such as, e.g., user device 110. In some implementations, the data processing system 120 receives the request via an application executing on the user device 110. A mobile application executing on a mobile device (e.g., smart phone or tablet) may make a request for content. In another implementation, a web page may request content from the data processing system 120 responsive to a user of a mobile device 110 visiting the web page (e.g., via a mobile device 110).

In some implementations, the request for content includes information that can facilitate content selection. In some implementations, the data processing system 120 may request information from the user device 110 to facilitate identifying content or selecting content. The data processing system 120 may request or obtain information responsive to receiving a request for content from the user device 110. The information may include information about displaying the content on the user device 110 (e.g., a content slot size or position) or available resources of user device 110 to display or otherwise manipulate the content. In some implementations, the information may include attributes associated with the user device identifier such as a device type, telecommunication carrier, operating system, time of day, geography or location, whether the user device identifier is associated with a content providers remarketing or user list, etc.

Responsive to a request for content from a web page operator 115, the data processing system 120 provides a content item for display with a web page on a user device 110. A user of the user device 110 may view the content item (e.g., an impression) or may click on or select the content item (e.g., a click). In one implementation, an indication of user interest in the content item may include a click, selection, mouse over, finger gesture, shake motion, voice command, tap, or another indication that indicates user interest in the content item.

Still referring to FIG. 1, and in one implementation, the data processing system 120 includes an interface 130 and is constructed to receive, access or otherwise obtain data as well as output data. The interface 130 can include a communication interface that facilitates communication between components or modules of the data processing system 120 or external components or modules. In some implementations, the interface 130 can convey information to or from content provider 125, web site operator 115 or user devices 110. In some implementations, the interface 130 can communicate via an application layer protocol such as HyperText Transfer Protocol (HTTP).

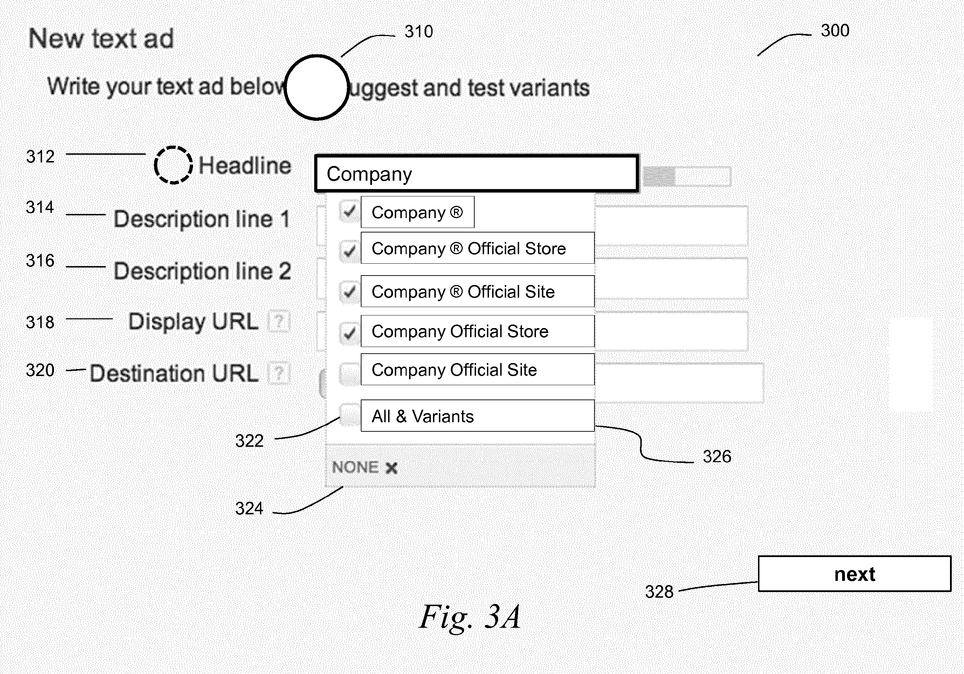

In one implementation, the interface 130 can provide or include a graphical user interface that is accessible to a content provider 125, illustrative implementations of which are shown in FIGS. 3A-3E. Using interface 130, the data processing system can receive (or a content provider 125 can provide) one or more content items. The content item can be associated with a content group or content campaign of the content provider 125.

In one implementation, the data processing system 120 includes a parser 135 designed and constructed to parse the content item. In various implementations, the content item can include various data such as text, keywords, characters, strings, symbols, metadata, images, audio, video, multimedia content or a combination thereof. The data of the content item can be organized or categorized into groups or fields such as a headline, a description line, a display URL, or a destination URL. In various implementations, the content item can include one or more fields or other types of fields such as company name, brand name, product type, price, geographic location, etc.

In one implementation, the data processing system 120 (e.g., via parser 135) can parse or analyze the data of the content item to identify at least one logical element of the content item. The logical element can include a word, number, phrase or symbol, or combination thereof, that the data processing system 120 can identify using one or more parsing techniques or algorithms. In some implementations, the logical element may include one or more of a noun, verb, preposition, or temporal language, symbol or punctuation mark. In one implementation, the logical element includes at least two of a noun, verb and temporal language (e.g., noun and verb, verb and temporal language, or noun and temporal language). In one implementation, the logical element includes each of a noun, verb and temporal language. In some implementations, the parser 135 can identify structural or punctuation elements, such as a capitalization of letters, numbers, symbols, punctuation marks, or the order of words or phrases. In an illustrative implementation, a logical element may include a call to action such as "Buy Now". The call to action can be categorized in one or more lines of the content item, such as a description line 1 or description line 2. In another illustrative implementation, the logical element may include a sale or discount indicator and include a number, symbol, and word such as "15% off'. In another illustrative implementation, a logical element may include the non-domain part of a display URL, such as www.example.com/<logical element>.

The data processing system 120 can employ one or more techniques, alone or in combination, to identify a logical element. The techniques can be stand-alone techniques or the data processing system can employ multiple techniques in one or more stages. In one implementation, the data processing system 120 can use a dictionary comprising logical elements. The data processing system 120 can parse data of the content item and compare the parsed data with a dictionary of known logical elements. Upon identifying that the parsed data maps to a known logical element stored in the database, the data processing system 120 can tag or otherwise indicate that the parsed data includes a logical element. In one implementation, the data processing system 120 can further identify a type of logical element such as a call to action, quantity descriptor, quality descriptor, price descriptor, etc., based on a categorization of the known logical element stored in the dictionary. In an illustrative implementation, the dictionary may include the phrase "Big Range", and may further identify that the phrase may include a logical element indicating a quantity of goods or services. The data processing system 120, upon parsing the content item or obtaining data of the content item, may determine that the data of the content item includes the phrase "Big Range" and further determine that the dictionary also includes the phrase "Big Range", thus identifying a matching logical element. Accordingly, the data processing system 120 can automatically determine that the content item data includes a logical element for a quantity descriptor. In one implementations, upon identifying a potential logical element, the data processing system 120 can prompt the content provider 125 for confirmation of the logical element.

In some implementations, the data processing system 120 can generate, update, or maintain the dictionary that includes logical elements. In one implementation, the data processing system 120 can store the dictionary that includes the logical elements on database 150, or otherwise access, communicate, or interface with the dictionary via network 105. In one implementation, a third party can generate the dictionary that includes the logical elements and provide the dictionary to the data processing system 120 or otherwise allow the data processing system 120 to access the dictionary.

In one implementation, the data processing system 120 generates or maintains the dictionary that includes logical elements. In one implementation, the dictionary can include one or more variants for one or more logical elements. The variants can be mapped to each logical element using various techniques. In some implementation, a logical element can be mapped to a variant via a data structure comprising rows and columns, where rows include different logical elements and columns include variants of the logical element. In some implementations, the logical element or variants may include a unique identifier that uniquely identifies the logical element or variant. In some implementations, the unique identifier may include additional information about the logical element or variant, such as a logical element type (e.g., call to action, size descriptor, quantity descriptor, quality descriptor, price descriptor, location descriptor, goods or services descriptor, etc.).

In one implementation, the data processing system 120 can generate or maintain the logical element dictionary based on parsing several similar content items of one or more content providers. In one implementation, the data processing system 120 can parse the content items to compare words or phrases to identify commonly occurring words or phrases or characteristics related to the commonly occurring words or phrases. In an illustrative implementation, the data processing system 120 can determine that several content items of several content providers include the phrase "Order Now". The data processing system 120 can then determine that several content items include the phrase "Order Now", that this phrase may include a logical element. The data processing system 120 may further analyze the phrase to determine that a first word of the phrase includes a verb, and a second word of the phrase includes temporal language. In some implementations, the data processing system 120 may correlate the logical element with one or more variants based on variants of the first word or the second word, or both. In some implementations, the data processing system may determine that the phrase is a call to action, or may prompt the content provider 125 to provide an indication of the type of logical element.

In one implementation, the data processing system 120 employs a parsing technique to identify logical elements based on syntactical meaning of words or phrases of the logical element. The data processing system 120 can employ a grammatical analysis, semantic analysis, probabilistic semantic analysis, or other technique to identify logical elements or their variants. The data processing system 120 can parse the content items in any language including, e.g., English, French, Spanish, German, Chinese, or any other language or script. In one implementation, the data processing system 120 can identify one or more words or terms of the content item as a noun, verb or temporal language, or a corresponding syntax in another language. The data processing system 120 can include or access a dictionary (corresponding to the language of the content item) of nouns, verbs or temporal language which the data processing system 120 can lookup or otherwise analyze to make a determination as to whether a term or word of the content item is a noun, verb or temporal language. In some implementations, the dictionary may further include synonyms or syntactically similar words or phrases. The data processing system 120 can employ an algorithm to determine whether the word or phrase is a logical element based on a comparison with the dictionary.

In one implementation, the data processing system 120 can prompt a content provider 125 for an indication of a logical element of the content item prior to, during, or after identifying or attempting to identify the logical element. In one implementation, the data processing system 120 can prompt (e.g., via interface 130) the content provider 125 to identify the logical element upon the content provider 125 transmitting, uploading, creating, or otherwise providing the content item to the data processing system 120. In one implementation, the data processing system 120 can generate, maintain or update the logical element dictionary based on the logical element information received from the content provider 125.

The data processing system can store one or more logical elements or variants in a data structure. The data structure can include unique identifiers for each logical element or variant. In some implementations, the data processing system 120 can store the logical elements or variants in a data structure using a naming scheme or taxonomy scheme that facilitates identifying a logical element and its variants.

In one implementation, the data processing system includes a content item generator 140 designed and constructed to generate a new content item or content item variant. The data processing system 120 can generate a new content item that includes, e.g., a logical element variant being substituted for a logical element, a re-ordering of one or more logical elements or words or phrases, or a structural, capitalization or punctuation change. The data processing system 120 can employ one or more techniques or algorithms to generate the content item variant, and may generate one or more variants.

In some implementations, the data processing system 120 generates a content item variant that includes a variant for a logical element. Upon identifying the logical element, the data processing system 120 can identify corresponding variants for the logical element that maintain the syntactic integrity of content (e.g., verb + temporal language can be replaced with a verb variant + temporal language variant).

In one implementation, the data processing system 120 can generate content items based on varying the placement of logical elements within a content item. In an illustrative implementation, a content item may include logical elements A, B, C, D. The data processing system 120 can parse the content item, identify the four logical elements, and generate a content item variant that includes the same logical elements or variants of one or more logical elements, but by moving the logical elements (or variants) around, such as C, D, A, B or C', D, A', B. In some implementations, the data processing system 120 can generate one or more permutations of the content item by changing the placement of the content items. In some implementations, the data processing system 120 can employ one or more logics or techniques to facilitate generating a content item variant that includes moving around or changing the placement of logical elements. In one implementation, the data processing system 120 can change the placement of logical elements based on logical element types, predetermined placement patterns, or in another manner. The data processing system 120 may rotate the placement of logical elements, swap the placement of logical elements, or otherwise change the placement of logical elements. In an illustrative implementation, the data processing system 120 can change the placement of logical elements based on an estimated importance or impact of the logical elements. The data processing system 120 may change the placement of logical elements by swapping the least important logical element with the most important logical element, or by swapping logical elements with adjacent or comparable levels of estimated importance.

In an illustrative implementation, the data processing system 120 may identify the logical element "Buy Now". The data processing system 120 may further identify variants (e.g., based on mapping the logical element to variants in a dictionary or database 150) for the logical element such as "Order Now", "Buy Today", "Order Today", "Purchase Soon". In one implementation, the data processing system 120 may substitute the logical element with a variant obtained from the dictionary that maintains the syntactic integrity of the logical element and content item (e.g., the dictionary may only include variants that would maintain the syntactic integrity of the logical element and, thus, the content item). In another implementation, the data processing system 120 may process the variant to determine whether the variant maintains syntactic integrity of the content item. In an illustrative implementation, the data processing system 120 may analyze the grammatical structure of the variant to determine if the variant maintains the syntactic integrity of the content item if the grammatical structure of the variant matches or substantially matches the identified logical element (e.g., verb + temporal language). In some implementations, the data processing system 120 can analyze the logical elements to varying granularity to facilitate maintaining a syntactic integrity as well as a semantic integrity. In some implementations, the data processing system 120 can further analyze the logical elements to determine a semantic meaning such as analyzing the temporal language to identify a time period such as a short time interval, long time interval, 24 hours or a day, periodic time interval, etc. In some implementations, the data processing system 120 can alter or vary the punctuation or structure (e.g., capital letters) of the variant to match the original logical element, while in other implementations the data processing system 120 can create an additional variant by altering or adding punctuation or structural elements (e.g., "order today" can be replaced with "Order Today!").

The data processing system 120, upon creating the content item variant (or child content item) from the original content item (or parent content item), can assign to the content item variant a unique identifier. The unique identifier may indicate from which content item the content item variant varies. In some implementations, the unique identifier further indicates what element of the content item was varied (e.g., headline, description line 1, description line 2, non-domain part of display URL, etc.). In some implementations, the unique identifier can further indicate the unique identifier of the logical element variant. In an illustrative implementation, the content item variant can be stored in a data structure such that the unique identifier of the content item variant indicates one or more of the content provider, content campaign, original or parent content item, logical element variant, etc.

The data processing system 120 can employ one or more techniques or algorithms to determine which elements to vary or substitute and how many content item variants to generate based on an original or parent content item. In one implementation, the data processing system 120 identifies a hierarchy of logical elements or components of a content item that indicates their priority. The priority can indicate an importance or usefulness of the element in improving or altering the performance of the content item. In an illustrative implementation, the headline of the content item may have a higher priority than the first description line, which may have a higher priority than the second description line, which may have a higher priority than the non-domain part of the display link. Thus, by identifying a hierarchy of elements of a content item to vary, the data processing system 120 can start optimizing the content campaign by varying higher priority elements, such as a headline or the first line of the description.

The data processing system 120 can provide, select, identify or serve the content item or one or more content item variants for display with a web page on a user device. The data processing system 120 can provide the content item or content item variant responsive to a request for content. In some implementation, a content selection sever can facilitate providing the content or content item variants.

In one implementation, the data processing system 120 can provide a first content item upon receiving a first request, and a second content item upon receiving a second request. The first and second requests for content may be associated with the same user device or different user devices. In an illustrative implementation, the data processing system 120 can receive ten requests for content from ten different user devices (e.g., responsive to entering a search query in a search engine, or accessing a web content or information resource such as a web site). The data processing system 120 may provide the first content item to some of the user devices, while providing the second content item to the remaining user devices. In one implementation, the data processing system 120 may provide both the first content item and the second content item if the request includes a request for multiple content items.

In one implementation, the data processing system 120 includes an optimizer 145 designed and constructed to analyze a performance metric (e.g., click through rate or conversion rate) of the content item or content item variant to determine an optimum performing content item. In one implementation, the data processing system 120 receives an indication of user interest in the displayed content item (e.g., content item or content item variant) via the computer network 105. The data processing system 120 can correlate the indication of user interest with the content item or content item variant. In one implementation, the data processing system 120 obtains an identifier (e.g., a username or cookie) associated with an application executing on the user device 110 (e.g., a web browsing session executing on a desktop computer, laptop computer, tablet computer, or smart phone). In one implementation, the data processing system 120 can log or store, in a content selection data structure, information associated with the content item, user device or an attribute associated with the indication of user interest in the content item.

The data processing system 120 can receive the indication of user interest from the user device 110 via the network 105. The data processing system can receive the indication of user interest or information associated with the indication of user interest via a computer network 105 via a TCP/IP protocol, cell phone data network, or another communication protocol of computer network 105. Responsive to receiving the indication of interest, the data processing system 120 can transmit a request to the user device 110 for an identifier of the user device 110. In one implementation, the user device 110 can transmit, to the data processing system 120, the identifier upon receiving the request for the identifier. In one implementation, a user of the user device 110 may receive a prompt or other notification of the request for the identifier. The data processing system 120 may receive the identifier upon a user of the user device 110 opting-in or agreeing to provide the identifier.

In one implementation, the data processing system 120 can identify an attribute associated with the indication of user interest or user device. The attribute can include, e.g., a time, a geography or location, a user device type, user device operating system, communication network provider, an indication of a remarketing list or user list, past search behavior, etc. The attribute may include a value. In an illustrative implementation, the time attribute may include a value such as the time at which the data processing system 120 receives the indication of user interest (or the time at which the user device transmits the indication of user interest), a time range (e.g., between 8-10 AM), a time of day (e.g., morning, afternoon, evening, night), the number of times the user may have indicated an interest in the content item, or a content item of the content group or content campaign. In an illustrative implementation, the geography or location attribute may include values such as a geographic region, country, state, county, city, town, ZIP code, or geographic coordinates such as latitude and longitude coordinates. The data processing system 120 may determine geographic location information of the user device associated with the indication of user interest based on, e.g., GPS, Wi-Fi, Bluetooth or cell tower triangulation techniques.

The user device type attribute may include values such as mobile computing device, portable computing device, desktop computing device, laptop computing device, notebook computing device, smartphone, or tablet. In some implementations, the device type attribute may include a manufacturer or provider of the device. The communication network provider (or carrier) attribute may include values such as the Internet Service Provider ("ISP") or mobile telecommunication service provider. The remarketing list or user list attribute may include a value of a remarketing list or user list. In one implementation, a remarketing list may include a list of user identifiers that have visited a certain website or web page, e.g., a website associated with the content provider. In one implementation, the user list may include list of user identifiers having a common interest such as an interest in travel, entertainment, clothing, sports, shoes, etc. The user list attribute may include a value or unique identifier corresponding to a user list (e.g., a user list comprising a list of user identifiers that are interested in shoes).

The data processing system 120 can receive the indication of user interest and receive, obtain or identify an attribute and value pair associated with the indication of user interest. The data processing system 120 can store, log or otherwise record the indication of user interest and the attribute value pair in a performance metric data structure of database 150. In an illustrative implementation, the data processing system 120 can identify a click on a displayed content item and further identify that the click occurred between 8 - 10 AM on a Monday. The data processing system 120 can store this information in a data structure. In an illustrative implementation, the data structure can include rows and columns, where each row corresponds to an indication of user interest (e.g., click) and each column corresponds to an attribute and value. The data structure may also include a column for the variant identifier of the content item variant. The data processing system 120 can include a data structure for each content item, content group or content campaign. The variant identifier can indicate which element or component of the content item was changed, and may also indicate the change (e.g., <content_provider_ID> <content_campaign_ID> <parent_content_item_ID> <logical_element_ID> <variant>; "hat_company summer_hats sports_baseball_hat description_line_1 Huge_Selection"). In other implementations, the identifiers can be letters, numbers, text, strings, or symbols.

The data processing system 120 (e.g., via optimizer 145) can identify an optimum performing or best performing content item (including content item variant) based on the performance metrics. In some implementations, data processing system 145 identifies the best performing content item based on comparing a click through rate or a conversion rate of a first displayed content item with a click through rate or a conversion rate of a second displayed content item, where the first content item or the second content item can include a content item variant. In one implementation, the data processing system 120 compares the performance metric of a parent content item (e.g., the original content item provided by the content provider 125) with a content item variant, variant of a content item variant, etc. The data processing system 120 may identify the best performing displayed content item (including all variants) based on the highest performance metric. The data processing system 120 can identify the best performing content item based on performance aggregated across a plurality of user devices.

The data processing system 120 can identify the best performing content items based on various performance metrics including, e.g., conversion / impression rate, return on investment (ROI), cost per action (CPA), cost per conversion, cost per click, etc.

In some implementations, the data processing system 120 can identify several optimum content items (including variants) by identifying content items that exceed a performance threshold (e.g., set by a content provider 125, an administrator of a data processing system 120 or dynamically determined by the data processing system 120). The data processing system 120 can dynamically set the performance threshold based on optimizing a return on investment ("ROI"), or another performance metric or combination of performance metrics.

The data processing system 120 can also identify optimum or best performing content items for a value of an attribute or a combination of values of attributes. In some implementations, the data processing system 120 can identify a best performing content item by analyzing performance metrics for one or more attributes. In one implementation, the data processing system 120 can determine a best performing content item or content item variant for a geographic location, time of day, user device, operating system, carrier or telecommunication service provider, user list, or remarketing list, past behavior or a combination thereof. In some implementations the data processing system 120 can identify the best performing content item among all users, or based one or more dimensions and their intersections by using an attribute or attribute combination such as time & location, location & device, etc. The data processing system 120 can analyze the performance data stored in the performance metric data structure of database 150 to identify one or more attributes, attribute values, and best performing content items (or content item variants) for one or more attribute values.

In an illustrative implementation, the data processing system 120 can identify or determine that a first content item (e.g., an original content item) is an optimum performing content item (e.g., highest click through rate or conversion rate as compared to all other content items or content item variants associated with the same content campaign or content group) for a first value of a first attribute (e.g., a time attribute with a value of 6 - 10 PM). The data processing system 120 can further identify or determine that a second content item is an optimum performing content for a second value of the first attribute such as a value of 8 - 10 AM for the time attribute. Upon receiving a request for content, the data processing system 120 can determine an attribute and value pair associated with the request, and provide, serve or identify an optimum performing content item or content item variant for the attribute-value pair as a candidate content item for display on the user device 110 associated with the request for content.

The data processing system 120 can identify or determine the optimum performing content item (or content item variant) in an offline process or a real-time process responsive to a request for content. The data processing system 120 can increasingly select, serve or provide high performing content items or content item variants while reducing the frequency of selecting, serving or providing lower performing content items or content item variants of a content campaign or content group. In one implementation, the data processing system 120 can initially equally serve all content item and content item variants in order to obtain a baseline performance metric for each content item and content item variant. Upon serving each content item and content item variant a predetermined number of times (e.g., 100, 200, 500, 1000 or another number that facilitates optimizing a content campaign), the data processing system 120 can determine the highest performing content item or content item variant, and continue to serve the highest performing content item. The data processing system 120 may generate additional variants based on the highest performing content item and repeat this process.

In some implementations, the data processing system 120 can apply a weighting factor to the content items that corresponds to a performance metric of the content item. The data processing system 120 can assign, to a higher performing content item (e.g., higher click through rate or conversion rate), a weighting factor that increases the likelihood that the higher performing content item is selected for display as compared to a lower performing content item, thus improving the performance of the content campaign or content group. In some implementations, the weight factor can be applied to content selection criteria of the content item, and utilized by a content selection server in selecting content for display with a web page.

In some implementations, the data processing system 120 can control for one or more attributes to facilitate comparing performance metric data for each content item and content item variant (e.g., serving all content items and content item variants between 6 - 10 PM to laptop user devices located in California). In some implementations, the data processing system can control for other variables such as the web site or type of web site on which the content item is displayed, the manner in which the content item is displayed (e.g., inline, popup, banner advertisement), or the size or position of the content item.

The data processing system 120 can continuously, periodically, or on some other interval, monitor the performance of one or more content items and generate one or more content item variants. In one implementation, the data processing system 120 may keep high performing content items (e.g., allow them to be selected for display on a web page) and remove low performing content items so they cannot be selected. In some implementations, the data processing system 120 may continuously create variants of content items. In one implementation, the data processing system may create variants of high performing content items and compare the variants with the high performing content item to identifying a higher performing content item. In some implementations, the data processing system 120 may create variants of low performing content items and compare the variants with the low or high performing content item to identifying a higher performing content item.

The data processing system 120 may initially create variants for high priority elements of a content item and test those variants (e.g., by varying the headline or description line 1). After one phase of performance testing and identifying one or more high performing content items (e.g., content items whose click through rate or conversion rate exceeds a predetermined performance threshold), the data processing system 120 can create new variants of the set of high performing content items. In some implementations, the new variants may vary the next in priority elements of the content item such as a second or third line of description, structure, or punctuation. The data processing system 120 may repeatedly analyze the performance of content item variants to identify high performing content item variants and repeatedly create new variants (of high or lower performing content item variants) and test those new variants to identifying higher performing content items.

In one implementation, the data processing system 120 can create or generate new content items by replacing multiple logical elements at the same time. The data processing system 120 can identify a first logical element variant that outperforms a first original logical element or previous logical element variant, and a second logical element variant that outperforms a second logical or a previous logical element variant. The data processing system 120 can then combine the two logical elements to create a new content that includes both of the outperforming logical element variants. Thus, in some implementations, the data processing system 120 can create and test logical element variants separately to identify the best performing logical element variants, and combine the best performing logical elements together to create a new content item.

Since the data processing system 120 can identify high performing content item variants for one or more attribute values, the data processing system 120 can aggregate the high performing content items based on attribute values for which they are high performing to create or identify an optimum content campaign that includes high performing content items for one or more attribute values. In one implementation, the aggregated content campaign may include a first content item (or variant) that has a high click through rate when viewed on mobile user devices, a second content item (or variant) that has a high click through rate when viewed on laptop user devices, third content item (or variant) that has a high click through rate when viewed on user devices in Massachusetts, and a fourth content item (or variant) that has a high click through rate when viewed on user devices in California. In some implementations, the high performing content item may be high performing for a combination of attributes such as mobile devices in California.

In some implementations, the data processing system 120 may be configured to allow a content provider 125 to indicate one or more attributes to use for optimizing a content campaign. In an illustrative implementation, the data processing system 120 may receive an indication from a content provider 125 that identifies one or more attributes or attribute values for optimization.

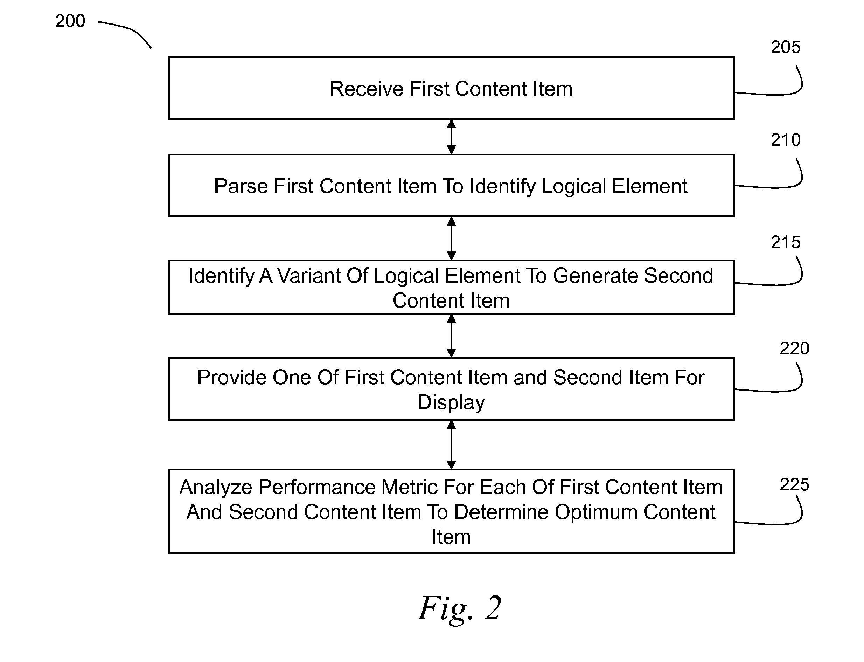

FIG. 2 is a flow chart illustrating an implementation of a method 200 of optimizing a content campaign of a computer network. In brief overview, and in one implementation, the method 200 includes a data processing system receiving a first content item from a content provider (205). The data processing system can include at least one processor executing on a server. The method 200 can include the data processing system parsing the content item to identify a logical element of the content item (210). The logical element can include a verb, noun, preposition, or temporal language. In some implementations, the method 200 includes identifying multiple logical elements, in which case the method can include prioritizing the identified logical elements (e.g., based on estimated importance or impact). The method 200 can include the data processing system identifying a variant of the logical element to generate a second content item (215). The second content item can include the variant and maintain the syntactic integrity of the content item. The method 200 can include the data processing system serving at least one of the first content item and the second content item for display on at least one web page (220). The data processing system can serve the content for display responsive to receive one or more requests for content from a user device. The method 200 can include the data processing system analyzing a performance metric for each of the first content item and the second content item to determine an optimum performing content item (225). If multiple logical elements are identified, the method can include performing one or more steps of method 200 for one or more of the identified logical elements.

In one implementation, the method 200 includes receiving a first content item from a content provider (205). In one implementation, the method 200 includes receiving the first content item via an interface of a data processing system. The first content item can correspond to a content item provided or created by a content provider. A content item can include text, an image, a document, an article, audio, video, multimedia content. In some implementations, a content item includes text advertisements or an image advertisement. The content item can be associated with a content campaign of a content provider, where the content campaign includes one or more content items that have a single or similar themes or ideas. In one implementation, content items of a content campaign can include a URL to the same web page or web site.

In one implementation, the method includes the data processing system receiving the content item from a content provider via an interface of the data processing system and via a computer network. In one implementation, the content provider can create the content item using a graphical user interface of the data processing system. In another implementation, the content provider can transmit or upload one or more content items to the data processing system via a computer network.

In one implementation, the method 200 includes the data processing system parsing the content item to identify a logical element of the content item (210). In one implementation, the method 200 includes parsing the content item via a parser of a data processing system. The method can include employing one or more techniques or algorithms to identify the logical element. In some implementations, the logical element can include a noun, verb, preposition or temporal language. In one implementation, the logical element includes at least two of a noun, verb and temporal language. In yet another implementation, the logical element includes each of a noun, verb and temporal language.

The method 200 can include the data processing system identifying the logical element by identifying syntax elements such as a noun, verb or temporal language or identifying adjacent syntax elements. In one implementation, the method 200 can include the data processing system identifying the logical element by comparing words or phrases of the content item with a dictionary of logical elements to identify a match or substantially similar word or phrase. In an illustrative implementation, the data processing system can identify the verb "Buy" in a content item and identify that the word "Buy" matches the dictionary. The data processing can further determine that the word following the verb "Buy" is temporal language (e.g., "Tomorrow"). In one implementation, the data processing system may determine that the dictionary does not include the phrase "Buy Tomorrow", but that the dictionary includes the phrase "Buy Today". The method can include the data processing determining that while the phrase "Buy Tomorrow" of the content item does not match a logical element in the dictionary, the fact that "Buy" is following by temporal language can indicate that "Buy Tomorrow" is a logical element. The method can further include the data processing system determining that "Buy Tomorrow" is a call to action based on the dictionary indicating that the phrase "Buy Today" is a call to action. Thus, in some implementations, the method includes identifying a logical element by identifying a partial word match and further identifying a syntactic match in the dictionary.

In one implementation, the method 200 includes identifying a variant of the logical element to generate a second item comprising the variant (215). In one implementation, the method 200 includes identifying the variant of the logical element via a data processing system (e.g., via a parser and/or content item generator of a data processing system). The second content item can maintain the syntactic integrity of the first content item (e.g., the grammatical structure of the first content item). In some implementations, the second content item can be referred to as a content item variant. The content item variant can include an identifier that identifies the content item variant. The identifier may further indicate the content item from which the content item variant varies (e.g., the original content item provided by the content provider). In some implementations, the content item variant can include a variant of a content item variant. In one implementations, the identifiers of the content item variant can indicate that a content item is a variant of a content item variant (e.g., two variations removed from the original content item). In some implementations, the identifier can indicate the number of variants in the content item (e.g., a variant to a first description line and a second description line, or multiple logical element variants on each line).

The method 200 can map a logical element to a logical element variant. In one implementation, a database or data structure may include mappings of logical elements to variants. In some implementations, the method 200 includes generating a database that includes logical element mappings. The database can be generated based on parsing similar content items provided by several content providers to identify similar logical elements. The similar logical elements may include the same syntax as each other (e.g., verb + temporal language). In some implementations, the logical element variants may further include similar semantic meaning (e.g., a variant of "Buy Now" can include "Purchase Today").

In one implementation, the method 200 includes the data processing system serving or providing the content item for display with a web page on a user device (220). The data processing system can provide the first content item or the second content item or both. Both the first content item and the second content item may be provided by the content provider (e.g., original content items), or one of the first content item and content item may be a content item variant (e.g., the second content item may be a variant of the first content item, where the first content item is an original content item), or both the first content item and the second content item may be content item variants. The method may include the data processing system providing, selecting or serving the content item responsive to receiving a request for a content item. The request may include additional information to facilitate content selection or analyzing a performance metric.

In some implementations, the data processing system can provide one or more content items or content item variants for display on several user devices. To facilitate identifying an optimum or best performing content item, the method may include equally providing the content items and their variants for display on several user devices to identify which content items perform the best (e.g., receive the most clicks or conversions from user devices).

In one implementation, the method 200 includes the data processing system analyzing a performance metric of the content item to determine a best performing or optimum content item (225). In one implementation, the method 200 can include an optimizer of the data processing system can analyze the performance metric to determine a best performing or optimum content item. The method can include receiving an indication of user interest in the content item (e.g., a click via an input of a user device). In one implementation, the data processing system can receive one or more indications of user interest in one or both of the first content item and second content item from one or more user devices. The data processing system may store or log the indications of user interest in a data structure that correlates, links or associates the indication of user interest with the content item (or a content item identifier).

In some implementations, the indication of user interest may be associated with additional information or attributes such as a location of the user device, time, user device type, operating system, carrier, user device identifier, user list, remarketing list, etc. In some implementations, the method may include prompting the user device for this or other additional information and the user device providing the information responsive to acknowledging the prompt for the information. In some implementations, the data processing system may identify the additional information based on a unique identifier of the user device and information stored in a database.

In one implementation, the method includes identifying a value for the attribute. In an illustrative implementation, an attribute may include time and a value for the time attribute and may include a specific time (e.g., 9 AM EST), a time range (e.g., 9 - 11 AM), or a time of day (e.g., morning, afternoon, evening, night). An attribute can have multiple values such as a user device identifier that is a member of multiple user lists or remarketing lists. The method can include maintaining a data structure that includes the attribute and the value or values for the indication of user interest (e.g., click or conversion rate) in the content item. The data structure may further indicate the type of indication of user interest, such as a click or a conversion. In one implementation, the data structure may further include the method of indicating interest such as a finger gesture, mouse click, or keyboard input. In some implementations, the data structure may include information about where the content item was placed on the web page (e.g., top right, above the fold, below the fold, etc.). In some implementations, the data structure may include information about the context in which the content item was displayed on a web page such as an advertisement being displayed alongside search engine results or a contextual advertisement that is displayed on a web site such as a news web site.

Based on the attribute information and several indications of user interest in one or more content items, the method can include analyzing the performance metric for each content item to identify a best performing content item. The best performing content item may have the highest click through rate or conversion rate. In some implementations, the method includes the data processing system identifying multiple best performing content items, where each content item is the best performing content item for an audience segment or set of attribute values. In one implementation, the data processing system identifies a best performing content item based on a click through rate, and in another implementation the data processing system identifies a best performing content item based on conversion rate. In some implementations, the data processing system identifies a best performing content item for one or more attributes or combinations of attributes (e.g., a content item that has the highest click through rate when displayed on user devices in Massachusetts and a content item that has the highest click through rate when displayed on user devices in California). In some implementations, the data processing system may control for various factors to facilitate identifying the best performing content item by, e.g., comparing click through rates when the content item is displayed on the same or similar web sites or in the same or similar position or manner on those web sites.

The method can include continuously monitoring or analyzing the performance of content item variants based on one or more attributes and continuously generating new content item variants for one or more elements of the content item and analyzing the performance of the new content item variants. By identifying the high performing content items and removing the lower performing content items, the method can include continuously optimizing a content campaign based on one or more attributes. In some implementations, the method can include determining that a content campaign is fully optimized such as after achieving a threshold click through rate or conversion rate for one or more attributes or after creating a certain number of content item variants (e.g., 1000, 10,000 or 100,000 variants).

In one implementation, upon identifying a best performing or optimum content item for one or more attribute values, the method can include receiving a request for a content item from a user device or web site operator and selecting the highest performing content item as a candidate for display on the user device. In one implementation, the method can include identifying an attribute value associated with the request for content and identifying a corresponding high performing content item for that attribute value, and providing that content item

FIGs. 3A-3E are illustrations of implementations of a graphical user interface ("GUI") of a data processing for facilitating optimizing a content campaign of a computer network. The GUI can be accessed by a content provider via a network. The GUI can include several fields and input text boxes that can be used to create a content item. In one implementation, a data processing system can receive a content item without a content provider creating the content item using the GUI. In brief overview, and in one implementation, the GUI can include a check box for suggesting and testing variants 310, a headline 312, description line 1 (314), description line 2 (316), display URL (318), and destination URL (320), drop down menu with variants 326, check boxes to select variants 322, select no variants button 324, and a next button 328 to go to the next content item field element.

In one implementation, a content provider may enter or input a company name into the input text box of the headline field 312. In one implementation, the data processing system may automatically populate the company name based on other information associated with the content provider (e.g., a username, profile information, content campaign). In one implementation, the data processing system may analyze or parse the input text box to identify it as a logical element that includes only a noun (e.g., Company name). The data processing system may then identify one or more variants for the logical element in real time. In one implementation, the data processing system may display one or more variants in a drop down menu 326. The variants for "Company" may include "Company ®", "Company ® Official Store", "Company ® Official Site", "Company Official Store" and "Company Official Site". The data processing system may identify additional variants but not display all of them in the drop down menu. The content provider can select one or more variants to include in the content campaign selecting check boxes 322. In one implementation, the content provider may indicate to select all variants by selecting "All & Variants". In one implementation, the content provider may indicate to select no variants by selecting "None" 324. The GUI may include a Next button 328 to go to the next content item element.

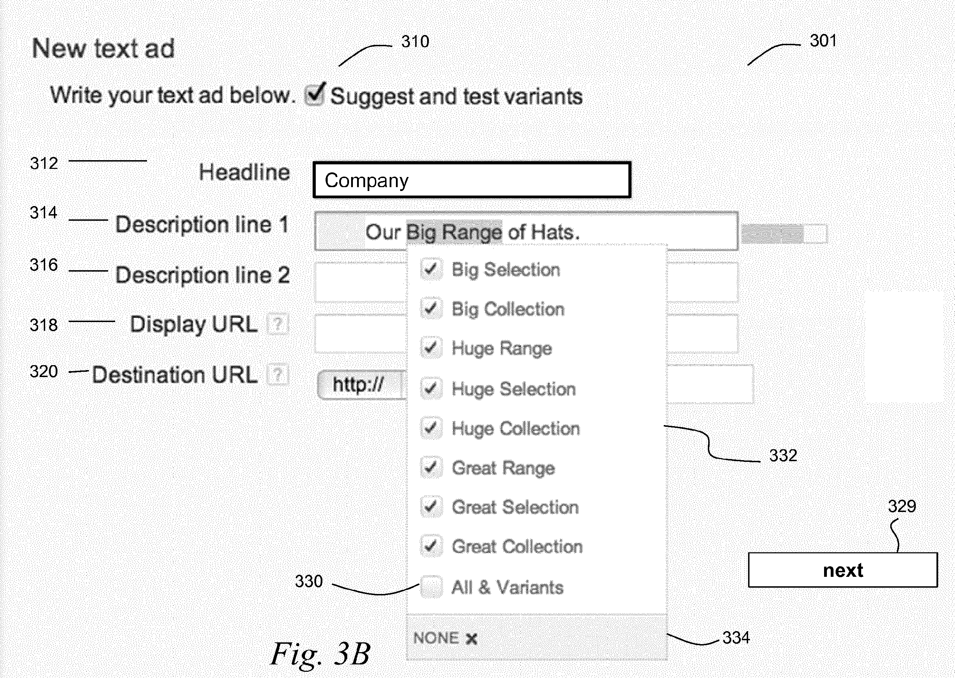

FIG. 3B is an illustration of an implementation of the first Description Line input text box 314. The content provider may input a description line 1 input such as "See Our Big Range of Hats". The data processing system an identify one or more words or phrases as the logical element. In this illustrative implementation, the data processing system can identify the logical element as "Big Range" and further identify several variants which the data processing system can display in a drop down menu 332. The variants for this logical element may maintain syntactic integrity with the original content text. The variants for the logical element "Big Range" may include "Big Selection", "Big Collection", "Huge Range", "Huge Selection", "Huge Collection", "Great Range", "Great Selection", and "Great Collection". The content provider may select one or more variants or all variants 330. In some implementations, the data processing system creates a new content item for each variant and tests each content item variant to identify a best performing content item variant. In one implementation, the content provider may select no variants 334, in which case the content item will include the original text. The GUI can include a next button 329 to go to the next content item element.

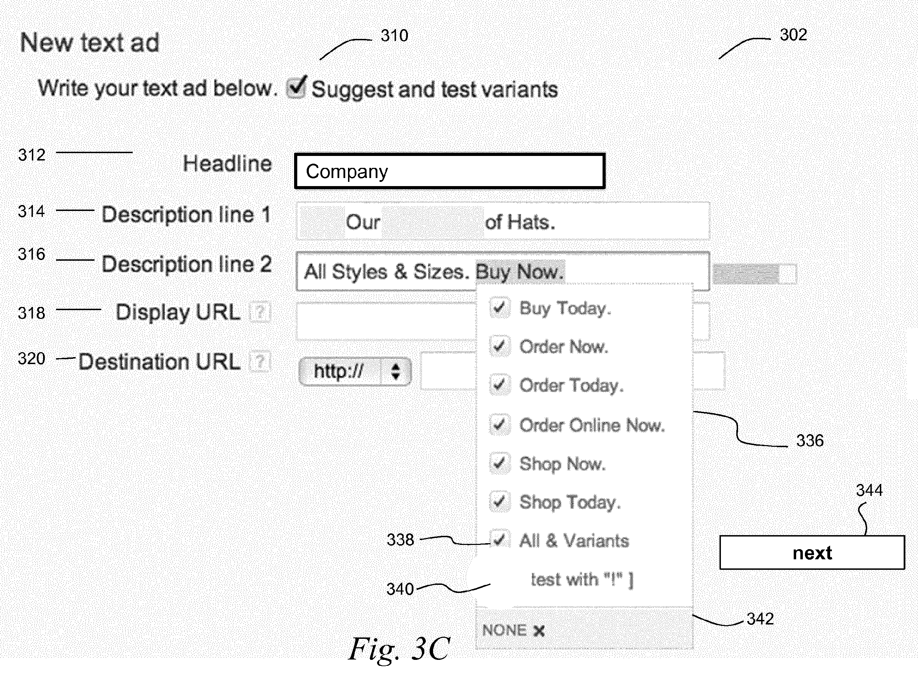

FIG. 3C is an illustration of an implementation of the second Description Line input text box 316. The content provider may input a description line 2 input such as "All Styles & Sizes. Buy Now." The data processing system can identify one or more words or phrases as the logical element. In this illustrative implementation, the data processing system can identify the logical element as "Buy Now" and further identify several variants which the data processing system can display in a drop down menu 332. The variants for this logical element may maintain syntactic integrity with the original content text. The variants for the logical element "Buy Now." may include "Buy Today.", "Order Now.", "Order Today.", "Order Online Now.", "Shop Now.", and "Shop Today." The content provider may select one or more variants or all variants 338. In one implementation, the variants can include punctuation variants such as an exclamation point "!" 340. In some implementations, the data processing system creates a new content item for each variant and tests each content item variant to identify a best performing content item variant. In one implementation, the content provider may select no variants 342, in which case the content item will include the original text. The GUI can include a next button 344 to go to the next content item element.

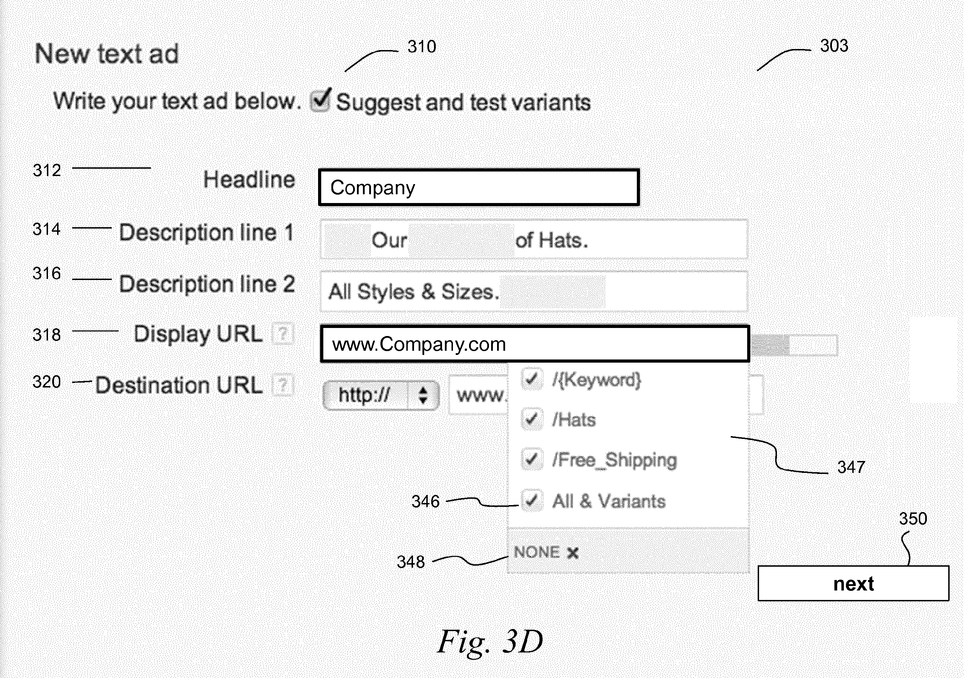

FIG. 3D is an illustration of an implementation of the Display URL input text box 318. The content provider may input a Display URL input such as "www.Company.com". The data processing system can identify one or more words or phrases of the non-domain part of the display URL as the logical element. In this illustrative implementation, the data processing system can identify the logical element as anything following the ".com/<logical element>" and further identify several variants which the data processing system can display in a drop down menu 347. The variants for the logical element of the non-domain type may include keywords, hats, free_shipping. The content provider may select one or more variants or all variants 346. In some implementations, the data processing system creates a new content item for each variant and tests each content item variant to identify a best performing content item variant. In one implementation, the content provider may select no variants 348, in which case the content item will include the original text. The GUI can include a next button 350 to go to the next content item element.

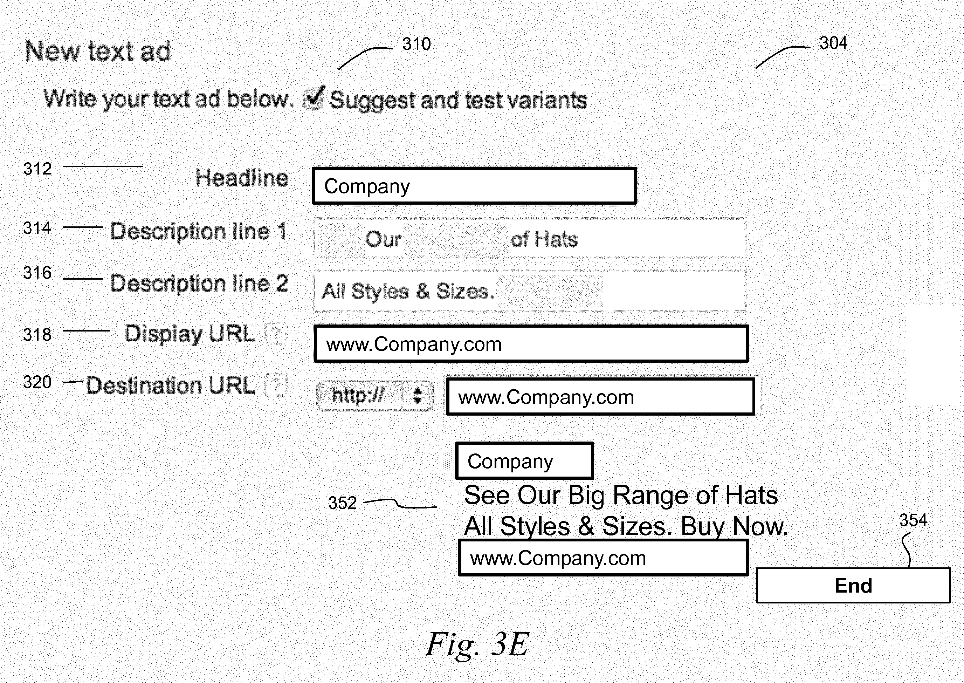

FIG. 3E is an illustration of a content item 352 that includes text input by the content provider. The data processing system can create variants of this content item as indicated by the content provider in each drop down menu in the previous screens, or otherwise indicated in a profile for this content campaign.

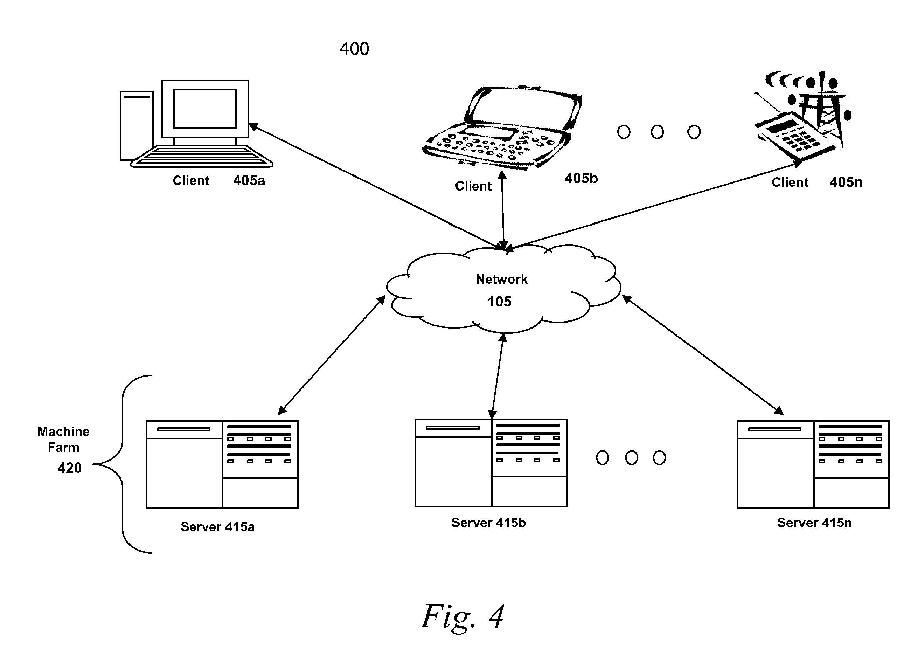

The system 100 and its components, such as a data processing system 120, may include hardware elements, such as one or more processors, logic devices, or circuits. FIG. 4 illustrates an implementation of a network environment 400. The system 100 and method 200 can operate in the network environment 400 depicted in FIG. 4. In brief overview, the network environment 400 includes one or more clients 405 that can be referred to as local machine(s) 405, client(s) 405, client node(s) 405, client machine(s) 405, client computer(s) 405, client device(s) 405, endpoint(s) 405, or endpoint node(s) 405) in communication with one or more servers 415 that can be referred to as server(s) 415, node 415, or remote machine(s) 415) via one or more networks 105. In some implementations, a client 405 has the capacity to function as both a client node seeking access to resources provided by a server and as a server providing access to hosted resources for other clients 405.

Although FIG. 4 shows a network 105 between the clients 405 and the servers 415, the clients 405 and the servers 415 may be on the same network 105. The network 105 can be a local-area network (LAN), such as a company Intranet, a metropolitan area network (MAN), or a wide area network (WAN), such as the Internet or the World Wide Web. In some implementations, there are multiple networks 105 between the clients 105 and the servers 415. In one of these implementations, the network 105 may be a public network, a private network, or may include combinations of public and private networks.

The network 105 may be any type or form of network and may include any of the following: a point-to-point network, a broadcast network, a wide area network, a local area network, a telecommunications network, a data communication network, a computer network, an ATM (Asynchronous Transfer Mode) network, a SONET (Synchronous Optical Network) network, a SDH (Synchronous Digital Hierarchy) network, a wireless network and a wireline network. In some implementations, the network 105 may include a wireless link, such as an infrared channel or satellite band. The topology of the network 105 may include a bus, star, or ring network topology. The network may include mobile telephone networks utilizing any protocol or protocols used to communicate among mobile devices, including advanced mobile phone protocol ("AMPS"), time division multiple access ("TDMA"), code-division multiple access ("CDMA"), global system for mobile communication ("GSM"), general packet radio services ("GPRS") or universal mobile telecommunications system ("UMTS"). In some implementations, different types of data may be transmitted via different protocols. In other implementations, the same types of data may be transmitted via different protocols.

In some implementations, the system 100 may include multiple, logically-grouped servers 415. In one of these implementations, the logical group of servers may be referred to as a server farm 420 or a machine farm 420. In another of these implementations, the servers 415 may be geographically dispersed. In other implementations, a machine farm 420 may be administered as a single entity. In still other implementations, the machine farm 420 includes several machine farms 420. The servers 415 within each machine farm 420 can be heterogeneous - one or more of the servers 415 or machines 415 can operate according to one type of operating system platform.

In one implementation, servers 415 in the machine farm 420 may be stored in high-density rack systems, along with associated storage systems, and located in an enterprise data center. In this implementation, consolidating the servers 415 in this way may improve system manageability, data security, the physical security of the system, and system performance by locating servers 415 and high performance storage systems on localized high performance networks. Centralizing the servers 415 and storage systems and coupling them with advanced system management tools allows more efficient use of server resources.

The servers 415 of each machine farm 420 do not need to be physically proximate to another server 415 in the same machine farm 420. Thus, the group of servers 415 logically grouped as a machine farm 420 may be interconnected using a wide-area network (WAN) connection or a metropolitan-area network (MAN) connection. In one implementation, a machine farm 420 may include servers 415 physically located in different continents or different regions of a continent, country, state, city, campus, or room. Data transmission speeds between servers 415 in the machine farm 420 can be increased if the servers 415 are connected using a local-area network (LAN) connection or some form of direct connection. Additionally, a heterogeneous machine farm 420 may include one or more servers 415 operating according to a type of operating system, while one or more other servers 415 execute one or more types of hypervisors rather than operating systems. In these implementations, hypervisors may be used to emulate virtual hardware, partition physical hardware, virtualize physical hardware, and execute virtual machines that provide access to computing environments.

Management of the machine farm 420 may be de-centralized. In one implementation, one or more servers 415 may comprise components, subsystems and circuits to support one or more management services for the machine farm 420. In one of these implementations, one or more servers 415 provide functionality for management of dynamic data, including techniques for handling failover, data replication, and increasing the robustness of the machine farm 420. Each server 415 may communicate with a persistent store and, in some implementations, with a dynamic store.

Server 415 may include a file server, application server, web server, proxy server, appliance, network appliance, gateway, gateway, gateway server, virtualization server, deployment server, secure sockets layer virtual private network ("SSL VPN") server, or firewall. In one implementation, the server 415 may be referred to as a remote machine or a node.

The client 405 and server 415 may be deployed as or executed on any type and form of computing device, such as a computer, network device or appliance capable of communicating on any type and form of network and performing the operations described herein.

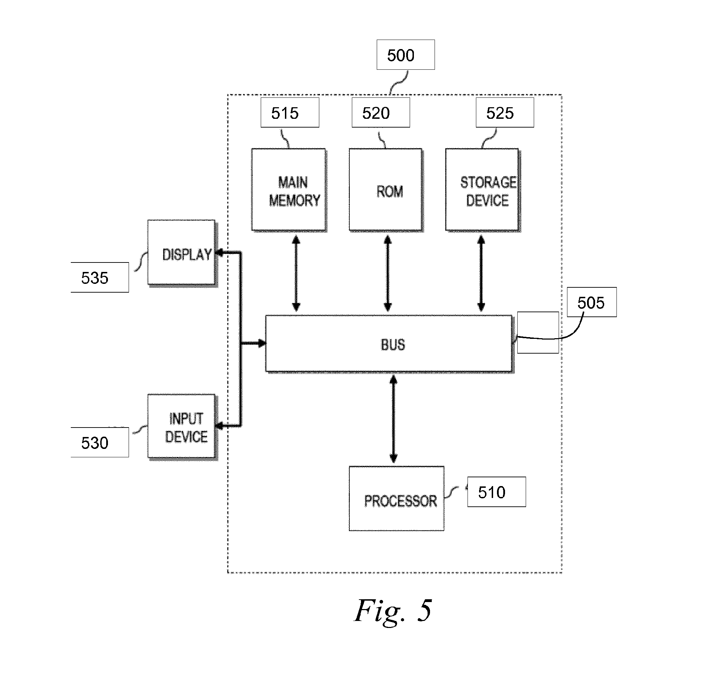

FIG. 5 is a block diagram of a computing system 500 in accordance with an illustrative implementation. The computing system or computing device 500 can be used to implement the system 100, content provider 125, user device 110, web site operator 115, data processing system 120, interface 130, parser 135, content item generator 140, optimizer 145 and database 150. The computing system 500 includes a bus 505 or other communication component for communicating information and a processor 510 or processing circuit coupled to the bus 505 for processing information. The computing system 500 can also include one or more processors 510 or processing circuits coupled to the bus for processing information. The computing system 500 also includes main memory 515, such as a random access memory (RAM) or other dynamic storage device, coupled to the bus 505 for storing information, and instructions to be executed by the processor 510. Main memory 515 can also be used for storing position information, temporary variables, or other intermediate information during execution of instructions by the processor 510. The computing system 500 may further include a read only memory (ROM) 520 or other static storage device coupled to the bus 505 for storing static information and instructions for the processor 510. A storage device 525, such as a solid state device, magnetic disk or optical disk, is coupled to the bus 505 for persistently storing information and instructions.

The computing system 500 may be coupled via the bus 505 to a display 535, such as a liquid crystal display, or active matrix display, for displaying information to a user. An input device 530, such as a keyboard including alphanumeric and other keys, may be coupled to the bus 505 for communicating information and command selections to the processor 510. In another implementation, the input device 530 has a touch screen display 535. The input device 530 can include a cursor control, such as a mouse, a trackball, or cursor direction keys, for communicating direction information and command selections to the processor 510 and for controlling cursor movement on the display 535.

According to various implementations, the processes described herein can be implemented by the computing system 500 in response to the processor 510 executing an arrangement of instructions contained in main memory 515. Such instructions can be read into main memory 515 from another computer-readable medium, such as the storage device 525. Execution of the arrangement of instructions contained in main memory 515 causes the computing system 500 to perform the illustrative processes described herein. One or more processors in a multi-processing arrangement may also be employed to execute the instructions contained in main memory 515. In alternative implementations, hard-wired circuitry may be used in place of or in combination with software instructions to effect illustrative implementations. Thus, implementations are not limited to any specific combination of hardware circuitry and software.

Although an implementation of a computing system has been described in FIG. 5, implementations of the subject matter and the functional operations described in this specification can be implemented in other types of digital electronic circuitry, or in computer software, firmware, or hardware, including the structures disclosed in this specification and their structural equivalents, or in combinations of one or more of them.

Implementations of the subject matter and the operations described in this specification can be implemented in digital electronic circuitry, or in computer software, firmware, or hardware, including the structures disclosed in this specification and their structural equivalents, or in combinations of one or more of them. The subject matter described in this specification can be implemented as one or more computer programs, i.e., one or more circuits of computer program instructions, encoded on one or more computer storage media for execution by, or to control the operation of, data processing apparatus. Alternatively or in addition, the program instructions can be encoded on an artificially generated propagated signal, e.g., a machine-generated electrical, optical, or electromagnetic signal that is generated to encode information for transmission to suitable receiver apparatus for execution by a data processing apparatus. A computer storage medium can be, or be included in, a computer-readable storage device, a computer-readable storage substrate, a random or serial access memory array or device, or a combination of one or more of them. Moreover, while a computer storage medium is not a propagated signal, a computer storage medium can be a source or destination of computer program instructions encoded in an artificially generated propagated signal. The computer storage medium can also be, or be included in, one or more separate components or media (e.g., multiple CDs, disks, or other storage devices).

The operations described in this specification can be performed by a data processing apparatus on data stored on one or more computer-readable storage devices or received from other sources.

The term "data processing apparatus" or "computing device" encompasses various apparatuses, devices, and machines for processing data, including by way of example a programmable processor, a computer, a system on a chip, or multiple ones, or combinations of the foregoing. The apparatus can include special purpose logic circuitry, e.g., an FPGA (field programmable gate array) or an ASIC (application specific integrated circuit). The apparatus can also include, in addition to hardware, code that creates an execution environment for the computer program in question, e.g., code that constitutes processor firmware, a protocol stack, a database management system, an operating system, a cross-platform runtime environment, a virtual machine, or a combination of one or more of them. The apparatus and execution environment can realize various different computing model infrastructures, such as web services, distributed computing and grid computing infrastructures.

A computer program (also known as a program, software, software application, script, or code) can be written in any form of programming language, including compiled or interpreted languages, declarative or procedural languages, and it can be deployed in any form, including as a stand alone program or as a circuit, component, subroutine, object, or other unit suitable for use in a computing environment. A computer program may, but need not, correspond to a file in a file system. A program can be stored in a portion of a file that holds other programs or data (e.g., one or more scripts stored in a markup language document), in a single file dedicated to the program in question, or in multiple coordinated files (e.g., files that store one or more circuits, sub programs, or portions of code). A computer program can be deployed to be executed on one computer or on multiple computers that are located at one site or distributed across multiple sites and interconnected by a communication network.

Processors suitable for the execution of a computer program include both general and special purpose microprocessors, and any one or more processors of any kind of digital computer. Generally, a processor will receive instructions and data from a read only memory or a random access memory or both. The essential elements of a computer are a processor for performing actions in accordance with instructions and one or more memory devices for storing instructions and data. Generally, a computer will also include, or be operatively coupled to receive data from or transfer data to, or both, one or more mass storage devices for storing data, e.g., magnetic, magneto optical disks, or optical disks. However, a computer need not have such devices. Moreover, a computer can be embedded in another device, e.g., a mobile telephone, a personal digital assistant (PDA), a mobile audio or video player, a game console, a Global Positioning System (GPS) receiver, or a portable storage device (e.g., a universal serial bus (USB) flash drive), to name just a few. Devices suitable for storing computer program instructions and data include all forms of non volatile memory, media and memory devices, including by way of example semiconductor memory devices, e.g., EPROM, EEPROM, and flash memory devices; magnetic disks, e.g., internal hard disks or removable disks; magneto optical disks; and CD ROM and DVD-ROM disks. The processor and the memory can be supplemented by, or incorporated in, special purpose logic circuitry.

To provide for interaction with a user, implementations of the subject matter described in this specification can be implemented on a computer having a display device, e.g., a CRT (cathode ray tube) or LCD (liquid crystal display) monitor, for displaying information to the user and a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input.

While this specification contains many specific implementation details, these should not be construed as limitations on the scope of any inventions or of what may be claimed, but rather as descriptions of features specific to particular implementations of particular inventions. Certain features described in this specification in the context of separate implementations can also be implemented in combination in a single implementation. Conversely, various features described in the context of a single implementation can also be implemented in multiple implementations separately or in any suitable subcombination. Moreover, although features may be described above as acting in certain combinations and even initially claimed as such, one or more features from a claimed combination can in some cases be excised from the combination, and the claimed combination may be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the implementations described above should not be understood as requiring such separation in all implementations, and it should be understood that the described program components and systems can generally be integrated in a single software product or packaged into multiple software products.

References to "or" may be construed as inclusive so that any terms described using "or" may indicate any of a single, more than one, and all of the described terms.

The phrase "at least one," in reference to a list of one or more elements, should be understood to mean at least one element selected from any one or more of the elements in the list of elements, but not necessarily including at least one of each and every element specifically listed within the list of elements and not excluding any combinations of elements in the list of elements. This definition also allows that elements may optionally be present other than the elements specifically identified within the list of elements to which the phrase "at least one" refers, whether related or unrelated to those elements specifically identified. Thus, as a non-limiting example, "at least one of A and B" (or, equivalently, "at least one of A or B," or, equivalently "at least one of A and/or B") can refer, in one implementation, to at least one, optionally including more than one, A, with no B present (and optionally including elements other than B); in another implementation, to at least one, optionally including more than one, B, with no A present (and optionally including elements other than A); in yet another implementation, to at least one, optionally including more than one, A, and at least one, optionally including more than one, B (and optionally including other elements); etc.

Thus, particular implementations of the subject matter have been described. Other implementations are within the scope of the following claims. In some cases, the actions recited in the claims can be performed in a different order and still achieve desirable results. In addition, the processes depicted in the accompanying figures do not necessarily require the particular order shown, or sequential order, to achieve desirable results. In certain implementations, multitasking and parallel processing may be advantageous.

## Claims

1. A system for optimizing a content campaign of a computer network, the system comprising:
a data processing system comprising at least one processor, the data processing system configured to:
receive, from a content provider, via an interface of the data processing system, a first content item of the content campaign;
parse, via a parser of the data processing system, the first content item to identify a logical element of the first content item, the logical element comprising at least one of a verb, noun and temporal language;
identify, via a content item generator of the data processing system, a variant of the logical element to generate a second content item comprising the variant, the second content item maintaining the syntactic integrity of the first content item;
provide, responsive to receiving one or more requests for content, at least one of the first content item and the second item for display on at least one web page; and
analyze, via an optimizer of the data processing system, a performance metric for each of the first content item and the second content item to determine an optimum performing content item.

2. The system of claim 1, wherein the data processing system is further configured to:
receive an indication of user interest in at least one of the first content item and the second content item;
identify a value for an attribute related to the user interest; and
maintain a data structure comprising the attribute and the value for the indication of user interest in at least one of the first content item and the second content item, the data structure used to analyze the performance metric for each of the first content item and the second content item.

3. The system of claim 2, wherein the attribute comprises at least one of a time attribute and a location attribute related to the indication of user interest.

4. The system of claim 2, wherein the data processing system is further configured to:
determine that the first content item is an optimum performing content item for a first value of a first attribute; and
determine that the second content item is an optimum performing content item for a second value of the first attribute.

5. The system of claim 1, wherein the data processing system is further configured to:
receive a subsequent request for content, the subsequent request for content corresponding to a first value of a first attribute; and
provide, responsive to a determination that the second content item is the optimum performing content item for the first value, the second content item for display.

6. The system of claim 1, wherein the data processing system is further configured to:
identify a second logical element that is lower in priority than the logical element;
identify a second variant for the second logical element; and
generate a third content item comprising the second variant, the third content item maintaining the syntactic integrity of the first content item.

7. The system of claim 1, wherein the data processing system is further configured to:
use a data structure comprising a mapping of logical elements to variants to identify the variant, the data structure generated based on parsing similar content items stored on the server.

8. A method of optimizing a content campaign of a computer network, comprising:
receiving, from a content provider by a data processing system comprising at least one processor, a first content item of the content campaign;
parsing, by the data processing system, the first content item to identify a logical element of the first content item, the logical element comprising at least one of a verb, noun and temporal language;
identifying, by the data processing system, a variant of the logical element to generate a second content item comprising the variant, the second content item maintaining the syntactic integrity of the first content item;
providing, responsive to receiving one or more requests for content, at least one of the first content item and the second item for display on at least one web page; and
analyzing, by the data processing system, a performance metric for each of the first content item and the second content item to determine an optimum performing content item.

9. The method of claim 8, wherein the variant comprises a variant identifier and the second content item comprises a content item identifier indicating that the second content item is a variation of the first content item.

10. The method of claim 8, wherein analyzing the performance metric comprises:
receiving, by the data processing system, an indication of user interest in at least one of the first content item and the second content item;
identifying, by the data processing system, a value for an attribute related to the user interest; and
maintaining, by the data processing system, a data structure comprising the attribute and the value for the indication of user interest in at least one of the first content item and the second content item.

11. The method of claim 10, wherein the attribute comprises at least one of a time attribute and a location attribute related to the indication of user interest.

12. The method of claim 10, further comprising:
determining, by the data processing system, that the first content item is an optimum performing content item for a first value of a first attribute; and
determining, by the data processing system, that the second content item is an optimum performing content item for a second value of the first attribute.

13. The method of claim 8, further comprising:
receiving, by the data processing system, a subsequent request for content, the subsequent request for content corresponding to a first value of a first attribute; and
providing, responsive to determining, for the first value, that the second content item is the optimum performing content item, the second content item for display.

14. The method of claim 8, comprising:
identifying, by the data processing system, a second logical element that is lower in priority than the logical element;
identifying, by the data processing system, a second variant for the second logical element; and
generating, by the data processing system, a third content item comprising the second variant, the third content item maintaining the syntactic integrity of the first content item.

15. The method of claim 14, comprising:
generating, by the data processing system, a fourth content item comprising the variant and the second variant, the fourth content item maintaining the syntactic integrity of the first content item.

16. The method of claim 8, wherein identifying the logical element comprises:
responsive to receiving the first content item, prompting the content provider for an indication of the logical element; and
receiving, from the content provider, an indication of the logical element of the first content item.

17. The method of claim 8, wherein identifying the variant comprises:
using a data structure comprising a mapping of logical elements to variants to identify the variant, the data structure generated based on parsing similar content items stored on the server.

18. The method of claim 8, wherein identifying the variant comprises:
comparing, by the data processing system, the identified logical element with several content items provided by several content providers.

19. A computer-readable storage medium comprising processor executable instructions to optimize a content campaign of a computer network, the instructions comprising instructions to:
receive, from a content provider, a first content item of the content campaign;
parse the first content item to identify a logical element of the first content item, the logical element comprising at least one of a verb, noun and temporal language;
identify a variant of the logical element to generate a second content item comprising the variant, the second content item maintaining the syntactic integrity of the first content item;
provide, responsive to receiving one or more requests for content, at least one of the first content item and the second item for display on at least one web page; and
analyze a performance metric for each of the first content item and the second content item to determine an optimum performing content item.

20. The computer readable storage medium of claim 19, wherein the instructions comprising instructions to:
receive an indication of user interest in at least one of the first content item and the second content item;
identify a value for an attribute related to the user interest; and
maintain a data structure comprising the attribute and the value for the indication of user interest in at least one of the first content item and the second content item, the data structure used to analyze the performance metric for each of the first content item and the second content item.
